# EUROPÄISCHE PATENTANMELDUNG

(11) **EP 2 693 045 A1**
(43) Veröffentlichungstag der Anmeldung: **05.02.2014**
(21) Anmeldenummer: 12005606.4
(22) Anmeldetag: 01.08.2012
(51) Int. Cl.: F03D 1/00, E04G 3/30, B66C 23/20, B66F 11/04

(54) **Befahranlage zur Durchführung von Inspektions- und Wartungsarbeiten an turmartigen Bauwerken**

(71) Anmelder: Rotor Control GmbH, 25821 Struckum (DE)
(72) Erfinder: Barluschke, Jerry, 25821 Struckum (DE)
(74) Vertreter: Thomas, Götz

(57) **Zusammenfassung**

Die Erfindung betrifft eine Befahranlage (10) zur Durchführung von Inspektions- und Wartungsarbeiten an turmartigen Bauwerken, insbesondere für Inspektions- und Wartungsarbeiten an Rotorblättern und Türmen von Windkraftanlagen, mit einem Grundkörper (12) und mindestens einem faltbaren und/oder teleskopierbaren mehrarmigen Ausleger (20), der sich aus einem zusammengefalteten Befahrzustand in auskragende Arbeitszustände überführen lässt, wobei der Grundkörper (12) entlang von mindestens einem Hubseil (16) am Bauwerk auf und ab verfahrbar ist und sich zumindest in den Arbeitszuständen unterhalb des Auslegers (20) gegen das Bauwerk abstützt. Um es zu ermöglichen, das Gewicht und den Platzbedarf der Befahranlage (10) reduzieren, umfasst die Befahranlage (10) erfindungsgemäß mindestens eine das Bauwerk umgebende spannbare biegeschlaffe Umschlingung (24), die im Abstand oberhalb vom Ausleger (20) am Grundkörper (12) angreift.

## Beschreibung

Die Erfindung betrifft eine Befahranlage zur Durchführung von Inspektions- und Wartungsarbeiten an turmartigen Bauwerken, insbesondere für Inspektions- und Wartungsarbeiten an Rotorblättern und Türmen von Windkraftanlagen, mit einem Grundkörper und mindestens einem faltbaren und/oder teleskopierbaren mehrarmigen Ausleger, der sich aus einem zusammengefalteten Befahrzustand in auskragende Arbeitszustände überführen lässt, wobei der Grundkörper entlang von mindestens einem Hubseil am Bauwerk auf und ab verfahrbar ist und sich zumindest in den Arbeitszuständen unterhalb des Auslegers gegen das Bauwerk abstützt.

Es wurden bereits verschiedene Befahranlagen zur Durchführung von Inspektions- und Wartungsarbeiten an Rotorblättern von Windkraftanlagen vorgeschlagen. Viele dieser Befahranlagen, wie zum Beispiel die in der EP 2 394 947 A1, der WO 2004/081373 A1, der WO 2007/085265 A1 und der WO 2005/064152 A2 offenbarten Befahranlagen, weisen Arbeitsbühnen auf, die das Rotorblatt ganz oder teilweise umschließen und an Hubseilen am Rotorblatt entlang auf und ab bewegt werden können.

Jedoch verursachen diese Befahranlagen mehrere Probleme. Erstens wird der Neigungswinkel der Hubseile immer flacher, je weiter die Befahranlage entlang des Rotorblatts nach oben gezogen wird und sich der Nabe nähert. Zweitens ist der Abstand zwischen dem Turm der Windkraftanlage und dem nach unten weisenden Rotorblatt in der Nähe der Nabe des Rotors sehr klein, so dass die Arbeitsbühne dort nicht mehr zwischen das Rotorblatt und den Turm der Windkraftanlage passt. Drittens lässt sich nicht bei allen Windkraftanlagen das zu wartende Rotorblatt vertikal bzw. parallel zum Turm ausrichten, was das Einführen oder Einfädeln des Rotorblatts in eine von der Arbeitsbühne umschlossene Öffnung unmöglich macht.

Um einen Teil dieser Probleme zu beseitigen, wurde in der WO 2010/136026 A1 bereits eine Befahranlage der eingangs genannten Art mit mindestens einem faltbaren mehrarmigen Gelenkausleger vorgeschlagen, der sich aus einem zusammengefalteten Zustand, in dem die Befahranlage am Turm entlang nach oben verfahren wird, in Arbeitszustände überführen lässt, in denen der Ausleger zu einem nach unten gerichteten Rotorblatt hin auskragt, um an diesem Wartungs- oder Inspektionsarbeiten vorzunehmen. Der mindestens eine Gelenkausleger besteht aus einem inneren und einem äußeren Gelenkarm, wobei der letztere an seinem freien Ende einen Arbeitskorb trägt und an seinem anderen Ende durch ein Gelenk mit einer vertikalen Schwenkachse mit dem inneren Gelenkarm verbunden ist. Der innere Gelenkarm ist seinerseits schwenkbar an einem Grundkörper in Form einer Führungs- und Hubeinheit angelenkt. Die Führungs- und Hubeinheit umfasst mindestens einen starren Ring, der sich zur Anpassung an variierende Turmdurchmesser über teleskopierbare, durch Linearantriebe ein- und ausfahrbare Traversen gegen den Turm abstützt. Bei einer Ausführung ist die Führungs- und Hubeinheit an Seilen vertikal beweglich, die mit einem Maschinenhaus der Windkraftanlage verbunden sind.

Bei dieser Befahranlage wird jedoch das große Gewicht und der große Platzbedarf der Führungs- und Hubeinheit als nachteilig angesehen, da sie größer dimensionierte Transportfahrzeuge und größer dimensionierte Winden zum Anheben der Befahranlage erforderlich machen.

Ausgehend hiervon liegt der Erfindung die Aufgabe zugrunde, eine Befahranlage der eingangs genannten Art dahingehend zu verbessern, dass ihr Gewicht und ihr Platzbedarf erheblich reduziert werden kann.

Diese Aufgabe wird erfindungsgemäß durch mindestens eine das Bauwerk umgebende spannbare biegeschlaffe Umschlingung gelöst, die in einem Abstand oberhalb vom Ausleger am Grundkörper angreift.

Der Erfindung liegt der Gedanke zugrunde, dass sich das Gewicht und der Platzbedarf der Befahranlage erheblich verringern lassen, wenn zur Anpassung an variierende Turmdurchmesser eine spannbare biegeschlaffe Umschlingung verwendet wird, die sich vom Grundkörper aus um das Bauwerk herum erstreckt. Eine solche biegeschlaffe Umschlingung nimmt in aufgewickeltem Zustand nur wenig Platz ein und kann wegen ihres geringen Gewichts schnell und einfach um das Bauwerk herumgelegt werden, bevor die Befahranlage entlang des Turms nach oben verfahren wird. Wenn die Befahranlage nach oben oder unten versetzt werden soll, braucht die Umschlingung nur gelockert zu werden. Zudem kann ihre Länge einfach an variierende Turmdurchmesser angepasst werden. Zur Durchführung von Wartungs- oder Inspektionsarbeiten in einer gewünschten Höhe kann die biegeschlaffe Umschlingung gespannt werden, um die an den Hubseilen hängende Befahranlage in Bezug zum Turm zu fixieren, bevor der mindestens eine Ausleger in einen auskragenden Arbeitszustand überführt wird. Die gespannte Umschlingung verhindert zum einen durch Windkräfte verursachte kleine Bewegungen des Grundkörpers, die zu großen Bewegungsamplituden des Endes des Auslegers führen würden. Zum anderen wird beim Spannen der Umschlingung die Abstützung an das Bauwerk angenähert und gegen das Bauwerk gedrückt. Wenn die Enden der Umschlingung erfindungsgemäß in einem Abstand oberhalb von dem mindestens einen Ausleger am Grundkörper angreifen, umgibt die gespannte Umschlingung das Bauwerk oberhalb vom Ausleger. Wenn die Umschlingung das Bauwerk im Abstand oberhalb vom Ausleger umspannt und sich der Grundkörper unterhalb vom Ausleger gegen das Bauwerk abstützt, können die in den Arbeitszuständen vom auskragenden Ausleger auf den Grundkörper ausgeübten erheblichen Momente in Form von Zugkräften in die gespannte Umschlingung und in Form von Druckkräften in die Abstützung eingeleitet und von diesen weiter in das Bauwerk eingeleitet werden, um sie abzufangen und damit ein ungewolltes Absinken des freien Endes des Auslegers zu verhindern. Darüber hinaus kann durch die gespannte Umschlingung auch ein Teil der Gewichtskräfte der Befahranlage in das Bauwerk eingeleitet werden.

Bei der biegeschlaffen Umschlingung kann es sich um ein Seil aus einem Material hoher Zugfestigkeit handeln, wie Nylon, Aramid oder Stahl, wobei das Seil zweckmäßig mit einer Umhüllung, zum Beispiele aus Gummi, versehen ist, um einen Verschleiß des gelockerten Seils bei der Auf- und Abbewegung entlang des Bauwerks zu verhindern. Alternativ handelt es sich bei der biegeschlaffen Umschlingung aber zweckmäßig um einen flachen Gurt, zum Beispiel einen Gewebegurt oder einen Gummigurt mit Gewebeeinlage. Darüber hinaus ist grundsätzlich auch die Verwendung einer Gliederkette als Umschlingung denkbar.

Um die Länge der um das Bauwerk herum gelegten biegeschlaffen Umschlingung an variierende Querschnittsabmessungen des Bauwerks anzupassen, ist vorzugsweise mindestens ein Ende der Umschlingung um eine Trommel einer Winde herum gewickelt, so dass die Umschlingung nach Bedarf gespannt, gelockert oder abgewickelt werden kann. Die Winde kann als Durchlaufwinde ausgebildet sein und ist bevorzugt mit einer Bremse oder anderen Arretierung versehen, die ein ungewolltes Lockern der gespannten Umschlingung in den Arbeitszuständen verhindert. Um zu gewährleisten, dass die Zugkraft in der Umschlingung an beiden Enden ungefähr gleich groß ist, sind vorzugsweise zwei Winden vorgesehen, die sich zum Spannen der Umschlingung zweckmäßig gemeinsam antreiben lassen. Alternativ könnte zum Spannen und Lockern der Umschlingung allerdings auch ein Flaschenzug mit Zylinder oder eine Spindel verwendet werden.

Dort, wo es sich bei der biegeschlaffen Umschlingung um ein Seil handelt, ist die Winde zweckmäßig eine Durchlaufwinde, von der aus das freie Seilende herabhängen kann. Dort, wo es sich bei der biegeschlaffen Umhüllung um einen Gurt oder eine Kette handelt, umfasst die Winde zweckmäßig eine Trommel, auf die der Gurt bzw. die Kette aufgewickelt wird.

Eine weitere bevorzugte Ausgestaltung der Erfindung sieht vor, dass zwei getrennte spannbare biegeschlaffe Umschlingungen übereinander um das Bauwerk herumgelegt sind, so dass im Falle eines Versagens von einer Umschlingung zur Sicherheit eine weitere Umschlingung vorhanden ist. Diese kann dann die vom Ausleger ausgeübten Momente abfangen und in das Bauwerk einleiten. Dadurch wird verhindert, dass bei einem Versagen der Umschlingung der auskragende Ausleger mit dem Arbeitskorb nach unten schwingt. Die beiden Umschlingungen können in einem geringen Abstand übereinander angeordnet werden, so dass sie auf dieselbe Winde auf- und abgewickelt bzw. mit dieser gespannt werden können. Jedoch kann zwischen den Umschlingungen auch ein größerer vertikaler Abstand vorgesehen werden, wodurch die untere Umschlingung ein Seitwärtskippen der Befahranlage um eine etwa durch die Turmmitte verlaufende Achse verhindert, wenn ein einseitiges Moment auf den Grundkörper ausgeübt wird.

Die spannbare biegeschlaffe Umschlingung braucht nicht einstückig ausgebildet sein, sondern kann zweckmäßig auch aus zwei oder mehr miteinander verbundenen Teilstücken bestehen, so dass sie in Abhängigkeit von den Querschnittsabmessungen des Bauwerks durch Einsetzen oder Entnahme von einem oder mehreren Teilstücken verlängert oder verkürzt werden kann.

Eine weitere vorteilhafte Ausgestaltung der Erfindung sieht vor, dass die Befahranlage im Befahrzustand entlang von zwei Hubseilen am Bauwerk entlang nach oben und unten verfahrbar ist und dass im Befahrzustand Kraftangriffspunkte der beiden Hubseile und der Schwerpunkt der Befahranlage eine vertikale Ebene aufspannen, so dass im Befahrzustand der mindestens eine Ausleger bezüglich einer die Kraftangriffspunkte verbindenden Achse kein Moment auf den Grundkörper ausübt. Dadurch kann verhindert werden, dass die Befahranlage bei ihrer Auf- und Abwärtsbewegung um eine zwischen dem Turm und dem Grundkörper verlaufende Achse kippt.

Wenn sich jedoch der mindestens eine Ausleger in einem auskragenden Arbeitszustand befindet, in dem er gestreckt und senkrecht zu der vertikalen Ebene durch die Kraftangriffspunkte der beiden Hubseile ausgerichtet ist, und wenn sich zudem eine Person in dem Arbeitskorb befindet, der dann in einem Abstand von mehr als 8 oder 9 Metern vom Grundkörper angeordnet ist, wirkt ein sehr großes Moment auf den Grundkörper ein. Dieses Moment wird über die Abstützung des Grundkörpers unterhalb des Auslegers und über die gespannte, das Bauwerk umgebende Umschlingung oberhalb des Auslegers aufgefangen, um ein Kippen der an den Hubseilen hängenden Befahranlage um eine zwischen dem Turm und dem Grundkörper verlaufende Achse zu verhindern.

Um vor allem in den weit auskragenden Arbeitszuständen des mindestens einen Auslegers die Zugkräfte in der Umschlingung zu begrenzen, kann es sinnvoll sein, den vertikalen Abstand zwischen dem Ausleger und der oberhalb von diesem angeordneten Umschlingung und damit den Hebelarm des Moments, mit dem das Moment des Auslegers kompensiert wird, zu vergrößern. Dies ist möglich, wenn die Winden zum Spannen der biegeschlaffen Umschlingung und damit die Kraftangriffspunkte der letzteren in Bezug zum Grundkörper in vertikaler Richtung verstellbar sind, so dass sie unter Vergrößerung des vertikalen Abstands vom Ausleger nach oben gefahren werden können.

Um sicherzustellen, dass die Umschlingung immer gespannt ist, wenn sich der mindestens eine Ausleger in einem auskragenden Arbeitszustand befindet, sieht eine weitere vorteilhafte Ausgestaltung der Erfindung vor, dass die Befahranlage eine Steuerung umfasst, die einerseits ein Überführen des Auslegers aus dem zusammengefalteten Befahrzustand in einen Arbeitszustand erst bei gespannter Umschlingung ermöglicht und andererseits ein Lockern der Umschlingung erst nach dem Einfahren des Auslegers in den zusammengefalteten Befahrzustand zulässt.

Gemäß einer weiteren bevorzugten Ausgestaltung der Erfindung umfasst die Befahranlage zwei allgemein gleich ausgebildete faltbare und/oder teleskopierbare mehrarmige Ausleger, die bevorzugt symmetrisch zu den Kraftangriffspunkten der Hubseile am Grundkörper befestigt sind, zweckmäßig in der Nähe von dessen entgegengesetzten Außenseiten, wo sie sich leichter am Rotorblatt vorbei in die auskragenden Arbeitzustände überführen lassen. Die Ausleger sind vorteilhaft in unterschiedlichen Höhen am Grundkörper angelenkt, so dass sie sich im zusammengefalteten Befahrzustand übereinander so eng wie möglich gegen den Grundkörper anlegen lassen.

Um den während der Befahrung eines Rotorblatts zum Lockern und Spannen der biegeschlaffen Umhüllung benötigten Zeitaufwand so gering wie möglich zu halten und die für die Wartungsarbeiten verfügbare Zeit zu maximieren, weist der oder jeder mehrarmige Ausleger vorteilhaft einen Gelenkarm auf, der um eine horizontale Schwenkachse in Bezug zum Grundkörper oder einem benachbarten Gelenkarm des Auslegers schwenkbar ist. Auf diese Weise kann die Reichweite bzw. der Arbeitsbereich eines am freien Ende des Auslegers montierter Arbeitskorbs in vertikaler Richtung erheblich vergrößert werden, wodurch die Befahranlage seltener umgesetzt werden muss.

Zwar ist der Arbeitsbereich des Auslegers in vertikaler Richtung am größten, wenn der nach oben und unten schwenkbare Gelenkarm direkt am Grundkörper angelenkt ist. Jedoch ist es arbeitstechnisch günstiger, den Arbeitskorb zuerst an das Rotorblatt heranzufahren und dann entlang des Rotorblatts nach oben und unten zu bewegen, weshalb der nach oben und unten schwenkbare Gelenkarm zweckmäßig der äußerste Gelenkarm des Auslegers ist. Dies gestattet es auch, den Arbeitskorb über den Befestigungspunkt des Hubseils am Bauwerk hinaus anzuheben, im Fall einer Windkraftanlage über die Unterseite der Nabe oder des Maschinenhauses hinaus. Der nach oben und unten schwenkbare Gelenkarm umfasst vorteilhaft einen Parallellenker oder anderen Lenker, der gewährleistet, dass der Arbeitskorb seine Ausrichtung beibehält, wenn der Gelenkarm nach oben oder unten geschwenkt wird.

Um eine große Reichweite mit einer großen Bewegungsflexibilität zu kombinieren, umfasst jeder mehrarmige Ausleger vorteilhaft insgesamt drei Gelenkarme, von denen ein erster Gelenkarm um eine vertikale Schwenkachse schwenkbar am Grundkörper angelenkt ist, während ein zweiter Gelenkarm um eine vertikale Schwenkachse schwenkbar am Ende des ersten Gelenkarms und ein dritter Gelenkarm um eine horizontale Schwenkachse schwenkbar am Ende des zweiten Gelenkarms angelenkt ist. Das Verschwenken der Gelenkarme erfolgt mit Hilfe von Hydraulikzylindern. Zweckmäßig kann auch mindestens einer der Gelenkarme teleskopierbar sein, was eine weitere Vergrößerung des Arbeitsbereichs der Ausleger ermöglicht, jedoch auch deren Gewicht erhöht.

Eine weitere bevorzugte Ausgestaltung der Erfindung sieht vor, dass mindestens einer der Gelenkarme ein geteilter Gelenkarm aus zwei Armteilen ist, die sich in zwei unterschiedlichen Stellungen starr miteinander verbinden oder kuppeln lassen. Während die beiden Armteile im Befahrzustand und in den Arbeitszuständen eine erste Stellung einnehmen, in der ihre Längsachsen zweckmäßig miteinander fluchten, nehmen die Armteile in einem Transportzustand der Befahranlage eine Stellung ein, in der sich die Abmessungen der Befahranlage verkleinern lassen, um den Platzbedarf beim Transport auf einem Anhänger oder einer Ladefläche eines Transportfahrzeugs zu minimieren. Vorteilhaft sind mindestens zwei der Gelenkarme geteilte Gelenkarme, deren Armteile schwenkbar miteinander verbunden sind und sich jeweils in zwei Schwenkstellungen in Bezug zueinander arretieren oder kuppeln lassen.

Zweckmäßig ist der erste, mit dem Grundkörper verbundene Gelenkarm ein geteilter Gelenkarm, der aus einem am Grundkörper angelenkten ersten Armteil und einem zweiten Armteil besteht, der sich in einer ersten und in einer zweiten Schwenkstellung in Bezug zum ersten Armteil arretieren lässt. Der zweite Armteil ist in der ersten Schwenkstellung in Verlängerung des ersten Armteils angeordnet, so dass der erste Gelenkarm im Befahrzustand und in den Arbeitszuständen der Befahranlage gestreckt bzw. gerade ist. In der zweiten Schwenkstellung ist der zweite Armteil senkrecht zum ersten Armteil und parallel zu einer Längsseite des Grundkörpers ausgerichtet, gegen die er im Transportzustand der Befahranlage zweckmäßig anliegt, so dass er beim Transport auf einem Anhänger oder einer Ladefläche eines Transportfahrzeugs einen geringen Platzbedarf besitzt. Eine weitere vorteilhafte Ausgestaltung der Erfindung sieht vor, dass auch der zweite Gelenkarm ein geteilter Gelenkarm ist, der aus einem ersten Armteil und einem zweiten Armteil besteht. Der erste Armteil ist länger und schwenkbar mit dem ersten Gelenkarm verbunden, während der zweite Armteil kürzer und schwenkbar mit dem dritten Gelenkarm verbunden ist. Die beiden Armteile lassen sich in Bezug zueinander in einer ersten Schwenkstellung arretieren, in der ihre Längsachsen miteinander fluchten, so dass die beiden Armteile im Befahrzustand und in den Arbeitszuständen gestreckt sind, sowie in einer zweiten Schwenkstellung, in der sie in allgemein paralleler Ausrichtung nebeneinander angeordnet sind, um den Platzbedarf bzw. die Länge der Ausleger im Transportzustand zu minimieren.

Im Folgenden wird die Erfindung anhand eines in der Zeichnung dargestellten Ausführungsbeispiels näher erläutert.
Fig. 1 zeigt eine perspektivische Ansicht einer Befahranlage zur Durchführung von Inspektions- und Wartungsarbeiten an Rotorblättern und Türmen von Windkraftanlagen in einem Transportzustand;
Fig. 2 zeigt eine perspektivische Ansicht der Befahranlage in einem Befahrzustand, in dem die Befahranlage am Turm der Windkraftanlage nach oben und unten verfahren wird;
Fig. 3 zeigt eine perspektivische Ansicht der Befahranlage in einem beispielhaften Arbeitszustand, in dem zwei mehrarmige Gelenkausleger zur Durchführung von Wartungsarbeiten an einem Rotorblatt nebeneinander gestreckt und gerade über einen Grundkörper auskragen;
Fig. 4 zeigt eine perspektivische Ansicht von einem der beiden Gelenkausleger;
Fig. 5 zeigt eine teilweise weg geschnittene vergrößerte perspektivische Ansicht von Teilen eines Gelenkauslegers im Transportzustand;
Fig. 6 zeigt eine teilweise weg geschnittene weiter vergrößerte perspektivische Ansicht von zwei Armteilen eines ersten Gelenkarms eines Gelenkauslegers im Befahrzustand;
Fig. 7 zeigt eine Draufsicht auf einen ersten und einen zweiten Gelenkarm eines Gelenkauslegers im Transportzustand;
Fig. 8 zeigt eine teilweise weg geschnittene weiter vergrößerte perspektivische Ansicht von zwei Armteilen eines dritten Gelenkarms eines Gelenkauslegers im Befahrzustand;
Fig. 9 zeigt eine teilweise weg geschnittene vergrößerte perspektivische Ansicht von Teilen des dritten Gelenkarms eines Gelenkauslegers im Befahrzustand.

Die in der Zeichnung dargestellte Befahranlage 10 dient vor allem zur Durchführung von Inspektions- und Wartungsarbeiten an Rotorblättern und Türmen von Windkraftanlagen, kann jedoch auch bei Inspektions- und Wartungsarbeiten an anderen hohen Bauwerken, wie Fernsehtürmen oder Schornsteinen eingesetzt werden.

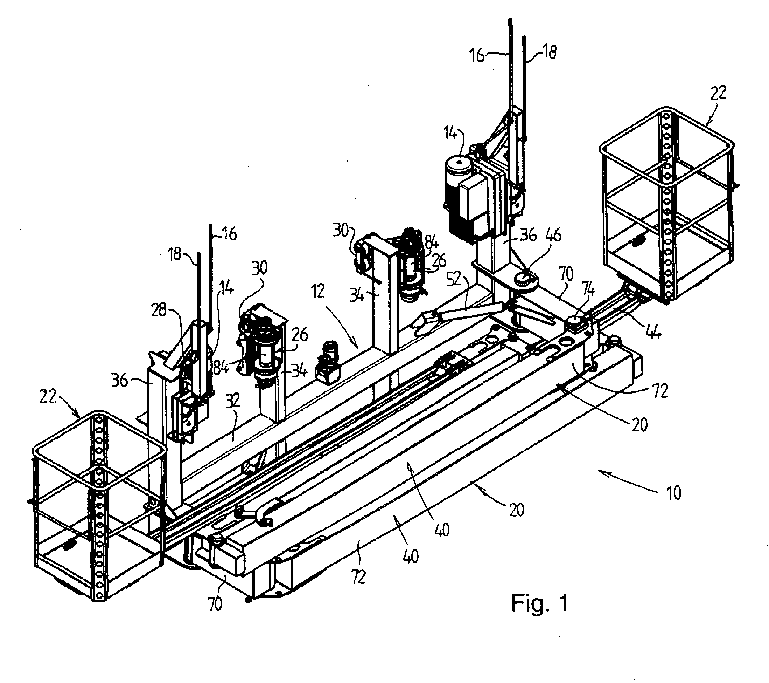

Wie am besten in den Figuren 1 bis 3 dargestellt, besteht die Befahranlage 10 im Wesentlichen aus einem Grundkörper 12, der sich mittels zweier Durchlaufwinden 14 an zwei Hubseilen 16 entlang eines Turms (nicht dargestellt) einer Windkraftanlage nach oben und unten verfahren lässt, zwei Sicherungsseilen 18 zur Sicherung der Befahranlage 10, zwei faltbaren dreiarmigen Gelenkauslegern 20, die in unterschiedlichen Höhen an zwei entgegengesetzten Schmalseiten des Grundkörpers 12 angeordnet und an ihren freien Ende jeweils mit einem Arbeitskorb 22 bestückt sind, zwei Gurten 24, die im Abstand oberhalb und unterhalb der Gelenkausleger 20 um den Turm der Windkraftanlage herum geschlungen und jeweils mit zwei am Grundkörper 12 montierten Winden 26 gespannt werden können, sowie insgesamt vier Abstützungen 30, mit denen sich der Grundkörper 12 oberhalb und unterhalb der Gelenkausleger 20 am Turm der Windkraftanlage abstützt.

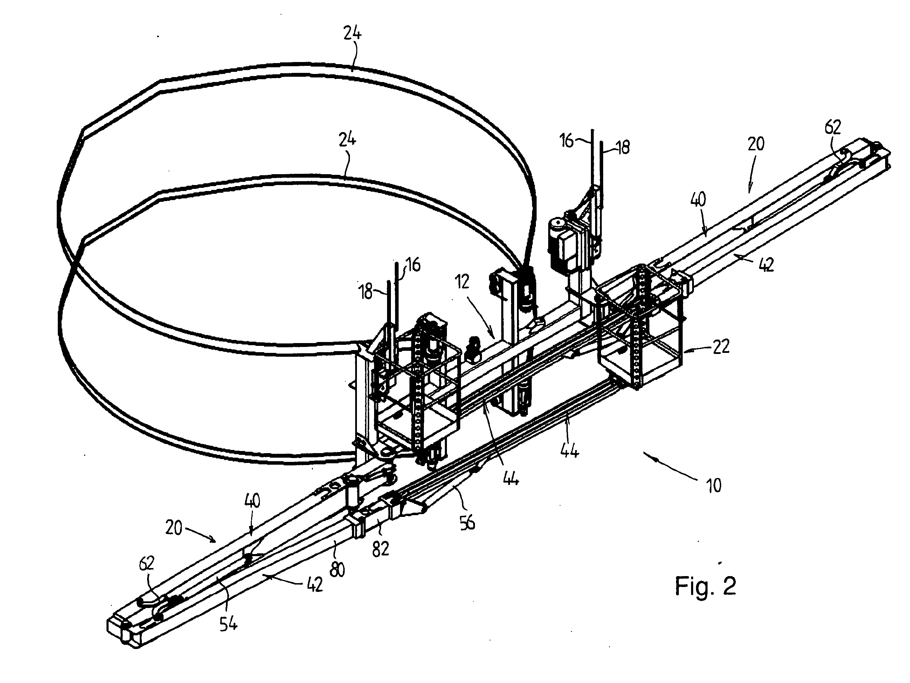

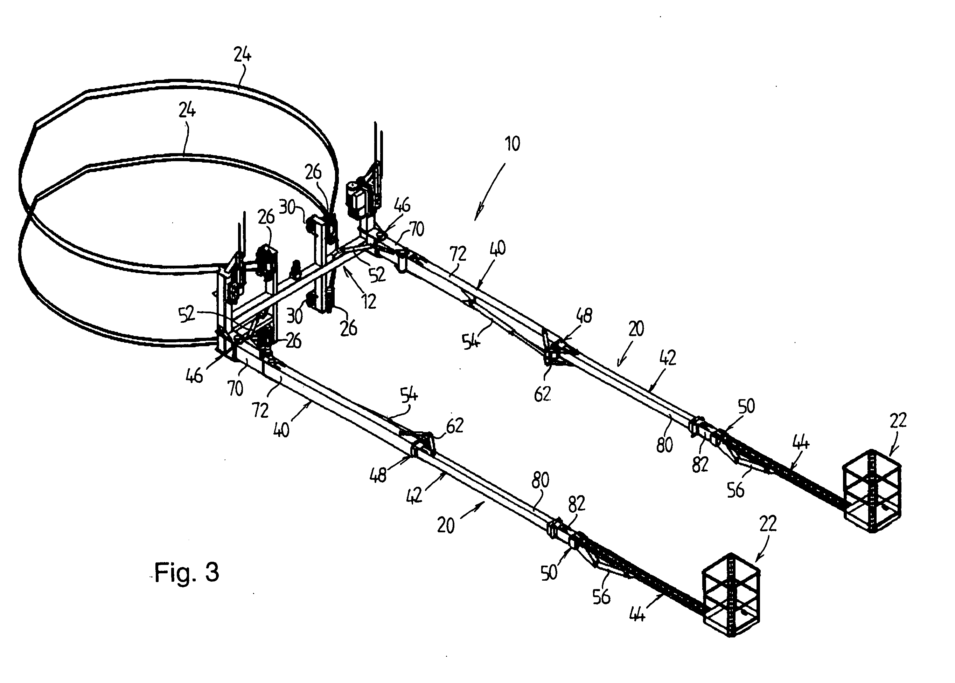

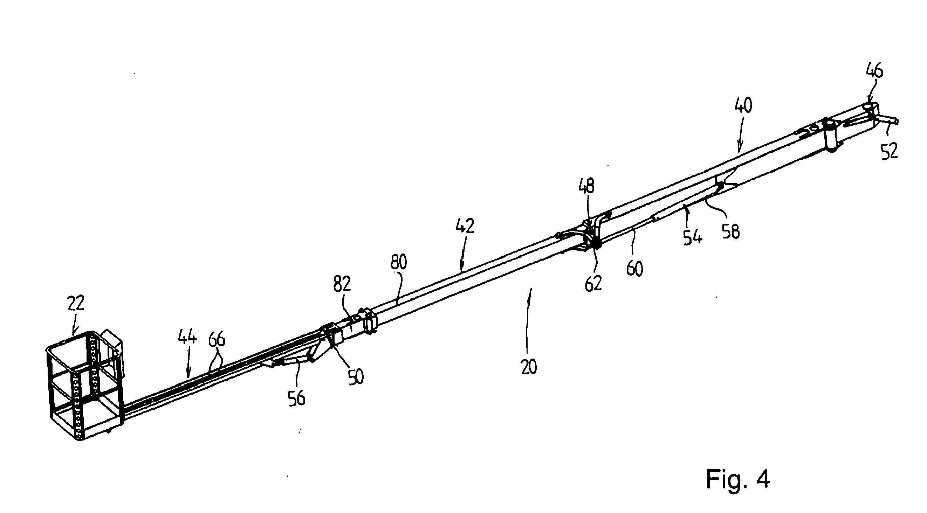

Die beiden faltbaren dreiarmigen Gelenkausleger 20 können jeweils einen in Fig. 1 dargestellten Transportzustand, einen in Fig. 2 dargestellten Befahrzustand, sowie eine Vielzahl von Arbeitszuständen einnehmen, von denen einer in Fig. 3 und 4 beispielhaft dargestellt ist. Im Transportzustand (Fig. 1) sind die faltbaren Gelenkausleger 20 zum Transport der Befahranlage 10 auf einem Transportfahrzeug so zusammengefaltet, dass sie eine minimale Länge aufweisen, die kürzer ist als ihre Länge im Befahrzustand (Fig. 2), und dass in einer Längsrichtung des Grundkörpers 12 nur die Arbeitskörbe 22 über diesen überstehen, während die zusammengefalteten Gelenkausleger gegen die vom Turm abgewandte Breitseite des Grundkörpers 12 anliegen. seitlich. Im Befahrzustand (Fig. 2), den die Gelenkausleger 20 zum Verfahren der Befahranlage 10 entlang des Turms einnehmen, sind die Gelenkausleger 20 ebenfalls zusammengefaltet, jedoch in einer anderen Konfiguration, so dass sie Längsrichtung des Grundkörpers 12 teilweise über diesen überstehen und die Arbeitskörbe 22 vor der vom Turm abgewandten Breitseite des Grundkörpers 12 angeordnet sind. Im Befahrzustand befindet sich der Schwerpunkt der Befahranlage 10 in einer vertikalen Ebene unterhalb der Angriffspunkte der beiden Hubseile 16, so dass um eine Längsmittelachse der Befahranlage 10 im Wesentlichen kein Moment ausgeübt wird und die Befahranlage 10 in einer Lage an den Hubseilen 16 hängt, in der die Boden der Arbeitskörbe 22 horizontal ausgerichtet sind. In den Arbeitszuständen sind die Gelenkausleger 20 vom Grundkörper 12 weg nach außen geschwenkt, wobei die Gelenkausleger 20 und ihre Arbeitskörbe 22 eine Vielzahl von verschiedenen Stellungen einnehmen können, in denen die Gelenkausleger 20 zumindest bei der Durchführung von Wartungsarbeiten an einem Rotorblatt weit über die vom Turm abgewandte Breitseite des Grundkörpers 12 auskragen. In der in Fig. 3 und 4 beispielhaft dargestellten Arbeitszustand sind die Gelenkausleger 20 gestreckt und allgemein rechtwinklig zum Grundkörper 12 ausgerichtet.

Der aus Stahlprofilen zusammengeschweißte Grundkörper 12 besteht im Wesentlichen aus einem Horizontalträger 32, sowie zwei inneren und zwei äußeren Vertikalträgern 34, 36, die starr mit dem Horizontalträger 32 verbunden sind und im seitlichen Abstand voneinander nach oben und teilweise auch nach unten über den Horizontalträger 32 überstehen. An den oberen Enden der beiden äußeren Vertikalträger 36 sind die Durchlaufwinden 14 angebracht, mit denen die Befahranlage 10 entlang der Hubseile 16 nach oben und unten verfahren wird. Weiter tragen die oberen Enden der äußeren Vertikalträger 36 so genannte Blockstops 28, durch welche die Sicherungsseile 18 verlaufen. An den unteren Enden der beiden äußeren Vertikalträger 36 sind die beiden Gelenkausleger 20 angebracht. An den oberen und unteren Enden der beiden inneren Vertikalträger 34 sind im vertikalen Abstand oberhalb bzw. unterhalb der Gelenkausleger 20 die beiden Paare von Winden 26 angebracht, mit denen die den Turm umgebenden Gurte 24 nach Bedarf gespannt oder gelockert werden können. An den oberen und unteren Enden der beiden inneren Vertikalträger 34 sind auf der Turm zugewandten Seite auch die vier Abstützungen 30 in Form von je zwei Rollen mit horizontalen Drehachsen angebracht, mit denen sich der Grundkörper 12 bei gespannten Gurten 24 gegen den Turm abstützt und im Befahrzustand auf der Turmoberfläche abrollen kann.

Bei den beiden Durchlaufwinden 14 kann es sich zum Beispiel um Durchlaufwinden handeln, die unter der Bezeichnung Tirak von der Firma Greifzug erhältlich sind. Die Durchlaufwinden 12 umfassen Magnetbremsen, die sich bei einem Stromausfall selbsttätig schließen und dann eine Bewegung der Befahranlage 10 entlang der Hubseile 16 verhindern. Die beiden Blockstops 28 blockieren mechanisch, wenn sich die Befahranlage 10 mit zu hoher Geschwindigkeit an den Sicherungsseilen 18 abwärts bewegt.

Die beiden faltbaren dreiarmigen Gelenkausleger 20 sind aus Feinkornstahl hergestellt und umfassen jeweils einen ersten, zweiten und dritten Gelenkarm 40, 42, 44. Zwischen dem Grundkörper 12 und dem ersten Gelenkarm 40 sowie zwischen dem ersten Gelenkarm 40 und dem zweiten Gelenkarm 42 ist jeweils ein Schwenkgelenk 46, 48 mit einer vertikalen Schwenkachse angeordnet, während zwischen dem zweiten Gelenkarm 42 und dem dritten Gelenkarm 44 ein Schwenkgelenk 50 mit einer horizontalen Schenkachse angeordnet ist, so dass der dritte Gelenkarm 44 mit dem Arbeitskorb 22 in Bezug zum zweiten Gelenkarm 42 nach oben und unten geschwenkt werden kann.

Zwischen dem Grundkörper 12 und dem ersten Gelenkarm 40 jedes Gelenkauslegers 20 ist ein erster Hydraulikzylinder 52 angeordnet, mit dem der gesamte Gelenkausleger 20 in Bezug zum Grundkörper 12 horizontal verschwenkt werden kann. Zwischen dem ersten und zweiten Gelenkarm 40, 42 jedes Gelenkauslegers 20 ist ein zweiter Hydraulikzylinder 54 angeordnet, mit dem der zweite und dritte Gelenkarm 42, 44 sowie der Arbeitskorb 20 in Bezug zum ersten Gelenkarm 40 horizontal verschwenkt werden können. Zwischen dem zweiten und dritten Gelenkarm 42, 44 ist ein dritter Hydraulikzylinder 56 angeordnet, mit dem der dritte Gelenkarm 44 und der Arbeitskorb 22 in Bezug zum zweiten Gelenkarm 42 in einer vertikalen Ebene verschwenkt werden können.

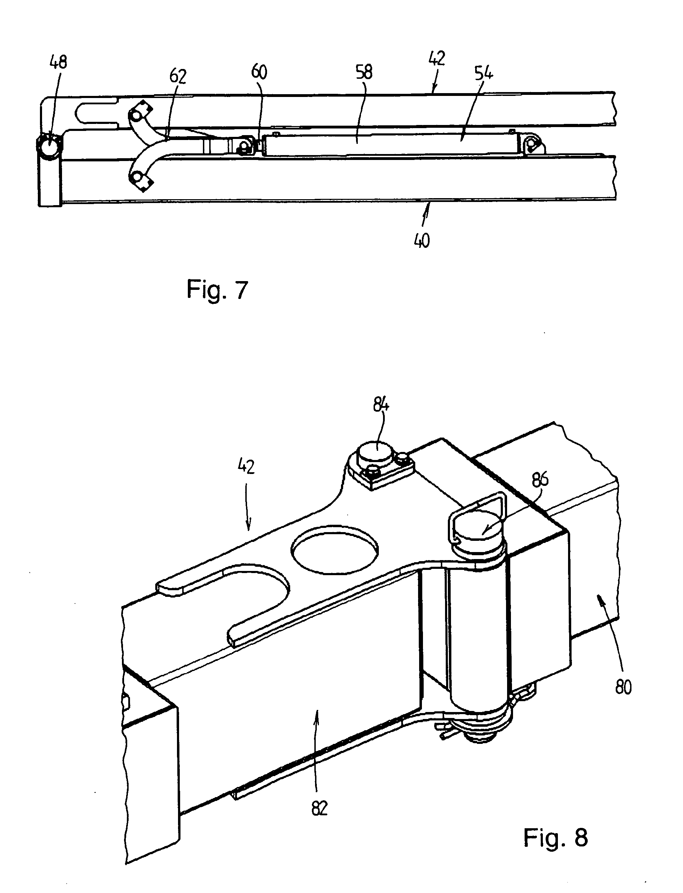

Wie am besten in Fig. 7 dargestellt, ist das Zylinderrohr 58 des zweiten Hydraulikzylinders 54 am ersten Gelenkarm 40 angelenkt, während die Kolbenstange 60 über einen mechanischen Spreizmechanismus 62 sowohl mit dem ersten und mit dem zweiten Gelenkarm 40, 42 verbunden ist. Durch den Spreizmechanismus 62 lassen sich der erste und der zweite Gelenkarm 40, 42 in Bezug zueinander um 180 Grad verschwenken.

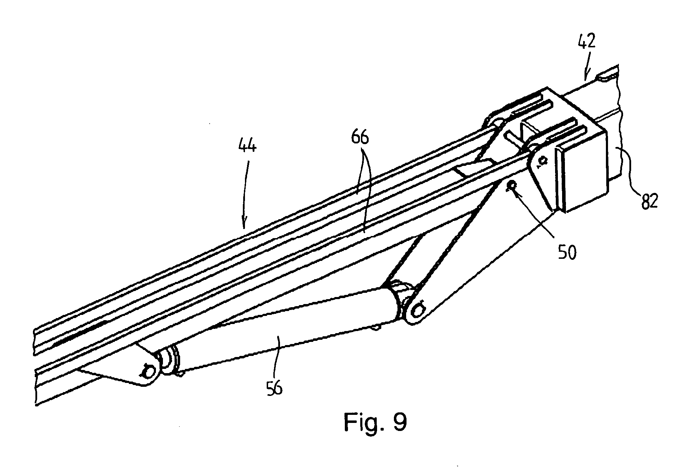

Der dritte Gelenkarm 44 ist schwenkbar an der Unterseite des Arbeitskorbs 22 befestigt. Wie am besten in Fig. 4 und 9 dargestellt, weist der dritte Gelenkarm 44 einen Parallellenker mit zwei Lenkerstangen 66 auf, der beim Verschwenken des dritten Gelenkarms 44 sicherstellt, dass der Arbeitskorb 22 eine Ausrichtung beibehält, in der sein Boden horizontal ist.

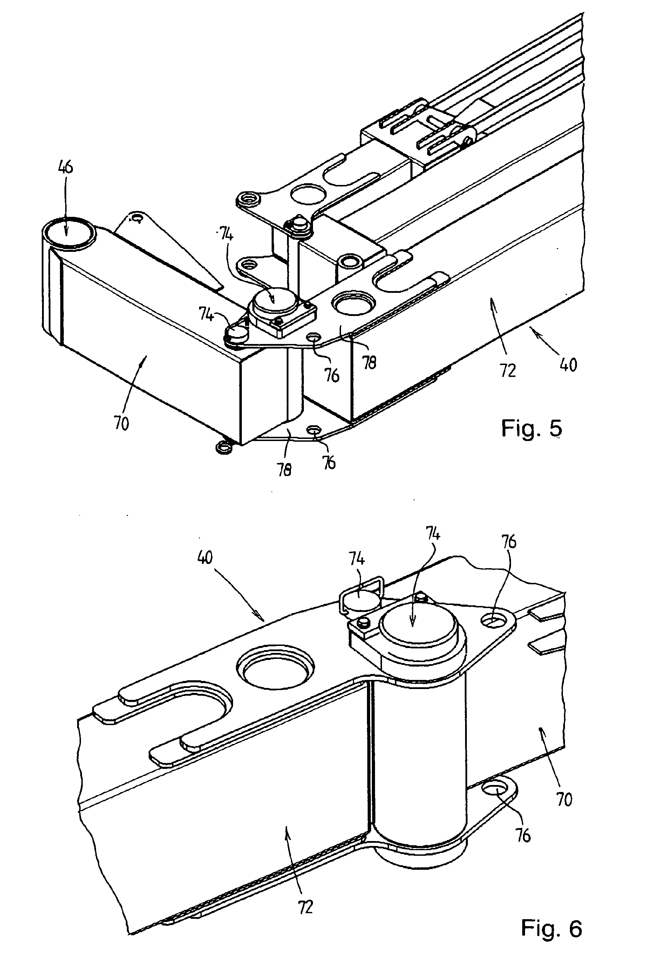

Wie am besten in den Figuren 5 und 6 dargestellt, besteht der erste Gelenkarm 40 aus einem ersten kurzen Armteil 70, der durch das erste Schwenkgelenk 46 schwenkbar mit dem Grundkörper 12 verbunden ist, sowie einem zweiten langen Armteil 72, der durch einen Schwenkbolzen 74 mit einer vertikalen Schwenkachse schwenkbar mit dem ersten Armteil 70 verbunden ist. Der zweite Armteil 72 lässt sich in Bezug zum ersten Armteil 70 mittels eines Arretierbolzens 74 in zwei diskreten Schwenkstellungen arretieren, in denen der Arretierbolzen 74 jeweils zwei Bolzenöffnungen 76 in einer Verlängerung 78 des zweiten Armteils 72 durchsetzt. In einer ersten Schwenkstellung (Fig. 6) fluchtet der zweite Armteil 72 mit dem ersten Armteil 70, womit die Länge des Gelenkauslegers 20 in den Arbeitszuständen maximiert werden kann. In einer zweiten Schwenkstellung (Fig. 5) ist der zweite Armteil 72 etwa senkrecht zum ersten Armteil 50 ausgerichtet, wodurch im Transportzustand die Länge des zusammengefalteten Gelenkauslegers 20 verkürzt werden kann, um den Platzbedarf der Befahranlage 20 zu verringern.

Wie am besten in den Figuren 4, 8 und 9 dargestellt, besteht der zweite Gelenkarm 42 aus einem ersten langen Armteil 80, der durch das zweite Schwenkgelenk 48 schwenkbar mit dem ersten Gelenkarm 40 verbunden ist, sowie einem zweiten kurzen Armteil 82 an dem zum dritten Gelenkarm 44 benachbarten Ende des zweiten Gelenkarms 42. Der zweite Armteil 82 ist durch einen Schwenkbolzen 84 mit einer vertikalen Schwenkachse schwenkbar mit dem ersten Armteil 80 verbunden. Der zweite Armteil 82 lässt sich mittels eines Arretierbolzens 86 in Bezug zum ersten Armteil 80 in einer ersten Schwenkstellung (Fig. 8 und 9) arretieren, in welcher der zweite Armteil 82 mit dem ersten Armteil 80 fluchtet. Nach der Entnahme des Arretierbolzens 86 kann der zweite Armteil 80 in eine zweite Schwenkstellung (Fig. 1) verschwenkt werden, um den der zweiten Armteil 82 zusammen mit dem dritten Gelenkarm 44 im Transportzustand parallel zum ersten Armteil 80 auszurichten. In der zweiten Schwenkstellung ist keine Arretierung der Armteile 80, 82 in Bezug zueinander erforderlich, da im Transportzustand der dritte Gelenkarm 44 zwischen dem Grundkörper 12 und dem Rest des zusammengefalteten Gelenkauslegers 20 angeordnet ist und sich somit nicht zusammen mit dem zweiten Armteil 82 aus der zweiten Schwenkstellung heraus bewegen kann.

Wie in Fig. 1 dargestellt, erstreckt sich im Transportzustand das arbeitskorbseitige Ende des dritten Gelenkarms 44 des einen Gelenkauslegers 20 über den ersten kurzen Armteil 70 des ersten Gelenkarms 40 des anderen Gelenkauslegers 20 hinweg, während sich das arbeitskorbseitige Ende des dritten Gelenkarms 44 des anderen Gelenkauslegers 20 unter dem ersten kurzen Armteil 70 des ersten Gelenkarms 40 des einen Gelenkauslegers 20 hindurch erstreckt. Die Arbeitskörbe 22 stehen in entgegengesetzten Richtungen über die zusammengefalteten Gelenkarme 40, 42 über, die im Transportzustand in ihre zweite Schwenkstellung gebracht worden sind, in welcher der Platzbedarf bzw. die Länge der Gelenkausleger 20 am geringsten ist.

Zur Steuerung der Bewegung der Gelenkarme 40, 42, 44 jedes Gelenkauslegers 20 ist in jedem der beiden Arbeitskörbe 22 eine Steuerkonsole (nicht dargestellt) vorgesehen, die mit einer Steuerung der Befahranlage 20 verbunden ist. Mit der Steuerkonsole lassen sich die Hydraulikzylinder 52, 54, 56 ansteuern, um den Arbeitskorb 22 in eine gewünschte Position zu bringen. Die Steuerkonsolen sind so geschaltet, dass die Hydraulikzylinder 52, 54, 56 jedes Gelenkauslegers 20 auch von der Steuerkonsole im Arbeitskorb 22 des anderen Gelenkauslegers 20 gesteuert werden können, so dass zum Beispiel bei einem Unfall einer Person in einem der beiden Arbeitskörbe 22 dessen Gelenkausleger 20 von einer Person im anderen Arbeitskorb 22 zurück in den zusammengefalteten Befahrzustand überführt werden kann, da sich die Befahranlage 20 nur in diesem Zustand nach unten fahren lässt.

Von den Steuerkonsolen der Arbeitskörbe aus ist es jedoch nicht möglich, die Winden 26 der Gurte 24 oder die Durchlaufwinden 14 der Hubseile 16 zu steuern, wodurch ein unbeabsichtigtes Lockern der Gurte 24 in einem Arbeitszustand der Gelenkausleger 24 verhindert werden kann. Die Steuerung der Winden 26 der Gurte 24 und der Durchlaufwinden 14 der Hubseile 16 erfolgt an einer Haupt-Steuerkonsole (nicht dargestellt), die im Befahrzustand von einem der Arbeitskörbe 22 aus zugänglich ist.

Weiter ist die Steuerung der Befahranlage 20 mit einer Sicherheitsschaltung ausgestattet, die einerseits sicherstellt, dass sich die beiden Gelenkausleger 20 erst dann aus dem zusammengefalteten Befahrzustand in einen auskragenden Arbeitszustand überführen lassen, wenn die beiden Gurte 24 gespannt und die Winden 26 mittels der integrierten Bremsen arretiert oder blockiert sind. Die Sicherheitsschaltung sorgt andererseits auch dafür, dass die Bremsen der beiden Winden 26 nur dann gelöst werden können, wenn sich beide Gelenkausleger 20 im zusammengefalteten Befahrzustand befinden.

Bei jedem der beiden Gurte 24, die den Turm im vertikalen Abstand voneinander umschlingen, handelt es sich um einen reißfesten flachen Gewebegurt 24, dessen entgegengesetzte Enden jeweils auf eine Aufwickeltrommel 84 von einer der Winden 26 aufgewickelt sind. Der Gurt 24 kann mit einem Verschleißüberzug aus Gummi oder einem anderen elastischen oder nachgiebigen Material versehen sein. Die Winden 26 besitzen jeweils einen elektrischen Antrieb mit umkehrbarer Drehrichtung, so dass durch Antreiben der beiden Winden 26 der Gurt 24 nach Bedarf auf die Aufwickeltrommeln 84 aufgewickelt bzw. von diesen abgewickelt werden kann, die Umschlingungslänge des Gurts 24 zur verkürzen oder zu verlängern, um sie an den Turmdurchmesser in der Höhe der Befahranlage 20 anzupassen oder um den Gurt 24 zu spannen. Jede Winde 26 besitzt eine integrierte Bremse oder Arretierung, welche die Aufwickeltrommel 84 im stromlosen Zustand der Winde 26 blockiert und ein Abwickeln des Gurts 24 von der Trommel 84 verhindert, solange der Winde 26 kein Strom zugeführt wird.

Der obere Gurt 24 umschlingt den Turm in einem vertikalen Abstand oberhalb von den beiden Gelenkauslegern 20, während der untere Gurt 24 den Turm etwas unterhalb von den Gelenkauslegern 20 umgibt.

In gespanntem Zustand dienen die Gurte 24 dazu, den Grundkörper 12 gegen den Turm zu ziehen, bis die Abstützungen 30 gegen den Turm angepresst werden. Weiter dient der obere Gurt 24 zusammen mit den beiden unterhalb der Gelenkausleger 20 angeordneten Abstützungen 30 dazu, die von den auskragenden Gelenkauslegern 20 in den Arbeitszuständen auf den Grundkörper 12 ausgeübten Momente abzufangen und in den Turm einzuleiten und damit zu verhindern, dass die Arbeitskörbe 22 nach unten schwingen. Der untere Gurt dient hauptsächlich dazu, ein Verdrehen der Befahranlage 20 um eine durch die Mitte des Grundkörpers 12 und des Turms verlaufende Achse zu verhindern, wenn die von den Gelenkauslegern 20 auf den Grundkörper ausgeübten Momente sehr unterschiedlich sind, zum Beispiel weil nur einer der Gelenkausleger 20 ausgefahren ist.

Die Abstützungen 30 bestehen jeweils aus zwei übereinander angeordneten Rollen, die so am oberen und am unteren Ende der inneren Vertikalträger 34 angebracht sind, dass sie beim Spannen eines oder beider Gurte 24 gegen die dem Grundkörper 12 zugewandte Oberfläche des Turms angepresst werden. Die Rollen dienen zugleich als Führungsrollen, wenn im Befahrzustand die Gurte 24 gelöst oder gelockert sind und die Befahranlage 10 an den Hubseilen 16 entlang nach oben oder nach unten bewegt wird.

## Patentansprüche

1. Befahranlage zur Durchführung von Inspektions- und Wartungsarbeiten an turmartigen Bauwerken, insbesondere für Inspektions- und Wartungsarbeiten an Rotorblättern und Türmen von Windkraftanlagen, mit einem Grundkörper und mindestens einem faltbaren und/oder teleskopierbaren mehrarmigen Ausleger, der sich aus einem zusammengefalteten Befahrzustand in auskragende Arbeitszustände überführen lässt, wobei der Grundkörper entlang von mindestens einem Hubseil am Bauwerk auf und ab verfahrbar ist und sich zumindest in den Arbeitszuständen unterhalb des Auslegers gegen das Bauwerk abstützt, **gekennzeichnet durch** mindestens eine das Bauwerk umgebende spannbare biegeschlaffe Umschlingung (24), die im Abstand oberhalb vom Ausleger (20) am Grundkörper (12) angreift.

2. Befahranlage nach Anspruch 1, **dadurch gekennzeichnet, dass** die Umschlingung ein Seil oder einen Gurt (24) aus einem Material hoher Zugfestigkeit umfasst.

3. Befahranlage nach Anspruch 1 oder 2, **gekennzeichnet durch** Mittel (26) zum Spannen und Lockern der biegeschlaffen Umschlingung (24).

4. Befahranlage nach Anspruch 3, **dadurch gekennzeichnet, dass** die Mittel (26) zum Spannen und Lockern der biegeschlaffen Umschlingung an zwei entgegengesetzten Enden der Umschlingung (24) angreifen.

5. Befahranlage nach Anspruch 3 oder 4, **dadurch gekennzeichnet, dass** die Mittel mindestens eine mit einer Bremse oder Arretiereinrichtung versehene Winde (26) oder Durchlaufwinde zum Spannen sowie zum Auf- und Abwickeln der biegeschlaffen Umschlingung (24) umfassen.

6. Befahranlage nach einem der vorangehenden Ansprüche, **dadurch gekennzeichnet, dass** der Grundkörper (12) entlang von zwei Hubseilen (16) verfahrbar ist und dass im Befahrzustand Kraftangriffspunkte der beiden Hubseile (16) am Grundkörper (12) und der Schwerpunkt der Befahranlage (10) eine allgemein vertikale Ebene aufspannen.

7. Befahranlage nach einem der vorangehenden Ansprüche, **gekennzeichnet durch** eine Steuerung, die das Überführen des Auslegers (20) aus dem Befahrzustand in einen Arbeitszustand nur bei gespannter Umschlingung (24) und/oder das Lockern der Umschlingung (24) nur im zusammengefalteten Befahrzustand gestattet.

8. Befahranlage nach einem der vorangehenden Ansprüche, **gekennzeichnet durch** zwei faltbare und/oder teleskopierbare mehrarmige Ausleger (20), die an entgegengesetzten Seiten des Grundkörpers (12) in unterschiedlichen Höhen angelenkt sind.

9. Befahranlage nach einem der vorangehenden Ansprüche, **dadurch gekennzeichnet, dass** der mindestens eine Ausleger (20) einen Gelenkarm (44) umfasst, der in Bezug zum Grundkörper (12) und/oder einen benachbarten Gelenkarm (42) des Auslegers (20) um eine horizontale Schwenkachse schwenkbar ist.

10. Befahranlage nach Anspruch 8, **dadurch gekennzeichnet, dass** der Gelenkarm (44) einen Parallellenker umfasst.

11. Befahranlage nach einem der vorangehenden Ansprüche, **dadurch gekennzeichnet, dass** der mindestens eine Ausleger (20) zwei Gelenkarme (40, 42) umfasst, die in Bezug zueinander um etwa 180 Grad schwenkbar sind.

12. Befahranlage nach einem der vorangehenden Ansprüche, **dadurch gekennzeichnet, dass** der mindestens eine Ausleger (20) drei Gelenkarme (40, 42, 44) umfasst, von denen ein erster Gelenkarm (40) um eine vertikale Schwenkachse schwenkbar am Grundkörper (12) angelenkt ist, ein zweiter Gelenkarm (42) um eine vertikale Schwenkachse schwenkbar am Ende des ersten Gelenkarms (40) angelenkt ist und ein dritter Gelenkarm (44) um eine horizontale Schwenkachse schwenkbar am Ende des zweiten Gelenkarms (42) angelenkt ist.

13. Befahranlage nach Anspruch 12, **dadurch gekennzeichnet, dass** mindestens einer der Gelenkarme (40, 42) zwei Armteile (70, 72; 80, 82) umfasst, die sich in unterschiedlichen Ausrichtungen starr miteinander verbinden lassen.

14. Befahranlage nach Anspruch 13, **dadurch gekennzeichnet, dass** die Armteile (70, 72; 80, 82) schwenkbar miteinander verbunden sind und sich in zwei unterschiedlichen Schwenkstellungen starr miteinander verbinden lassen.
